# EUROPEAN PATENT SPECIFICATION

(11) **EP 0 819 152 B1**
(45) Date of publication and mention of the grant of the patent: **24.05.2000**
(21) Application number: 96910724.2
(22) Date of filing: 02.04.1996
(51) Int. Cl.: C09J 153/02, C09J 7/02

(54) **LOW VISCOSITY HOT MELT PRESSURE SENSITIVE ADHESIVE COMPOSITIONS**
DRUCKEMPFINDLICHER HEISS-SCHMELZKLEBSTOFF MIT GERINGER VISCOSITÄT
COMPOSITIONS D'ADHESIFS SENSIBLES A LA PRESSION, THERMOFUSIBLES ET A FAIBLE VISCOSITE

(30) Priority: 03.04.1995 US 415264
(43) Date of publication of application: 21.01.1998
(73) Proprietor: EXXON CHEMICAL PATENTS INC., Baytown, TX 77520-5200 (US)
(72) Inventor: JACOB, Lutz, Erich, B-3080 Tervuren (BE)
(74) Representative: Dew, Melvyn John
(86) International application number: US9604560
(87) International publication number: WO9631573

(56) References cited:
- EP-A- 0 318 217
- WO-A-91/13106
- WO-A-93/04135
- GB-A- 2 289 681

## Description

### BACKGROUND OF THE INVENTION

### Field of the Invention

This invention relates to low viscosity, hot melt, pressure sensitive adhesive compositions which can be applied to substrates as a melt using high speed coating equipment.

### Description of Related Art

Hot melt pressure sensitive adhesive compositions based on thermoplastic block copolymers derived from a monovinyl aromatic hydrocarbon and a conjugated diolefin mixed with a tackifying resin are well known in the art. Typically such compositions contain a block copolymer of the A-B-A type as a base polymer, wherein A is typically a polymerized styrene block and B is typically a polymerized block of isoprene or butadiene, said copolymer generally having a number average molecular weight in the range of from 25,000 to 500,000. Mixtures of these block polymers with appropriate amounts of a tackifier resin, such as a terpene or rosin-type resin, and a processing oil provide compositions which combine good adhesive and cohesive properties, thereby rendering them particularly useful as hot melt pressure sensitive adhesives.

In the earlier-filed, copending U.S. application Ser. No. 08/345,103, distinction was made between hot melt pressure sensitive adhesives (HMPSA) compositions in general and those with low enough melt viscosities to be useful for high speed coating applications. The compositions therein comprised mixtures of:
a) 100 pans by weight of a thermoplastic elastomer having the structure (S-I)ₙ₋₁S wherein S is substantially a polystyrene block, I is substantially a polyisoprene block and n is an integer of from 2 to 10 and wherein the content of polystyrene in said thermoplastic elastomer ranges from 10 to 30% by weight and wherein the number average molecular weight of said thermoplastic elastomer ranges from 50,000 to 500,000;
b) from 70 to 150 parts by weight of a petroleum resin tackifier having a softening point in the range of from 85°C to 105° C, said resin being a Friedel Crafts copolymer comprising:
   i) a petroleum feed comprising C₅ olefins and C₅ diolefins or a mixture of C₅ and C₆ olefins and diolefins, said feed being obtained from the cracking of petroleum feedstock, copolymerized with
   ii) from 5 to 15% by weight, based on component (i), of one or a mixture of monovinyl aromatic compounds having 8-9 carbon atoms;
the composition characterized as having a melt viscosity at 175°C of less than 100,000 mPa.s as measured by ASTM-D3236.

EP 318,217 A2 discloses an adhesive composition comprising a styrenic block copolymer and a tackifying resin. The resin is prepared by the reaction of a mixed feed stream comprising 5 to 55 wt% of C₅/C₆ olefins and diolefins, 5 to 55 wt% terpenes and 3 to 55 wt% of an olefinically unsaturated aromatic compound. The resins have a softening point of less than 75°C.

U.S. Patent 5,171,793 discloses a process for preparing hydrogenated tackifier resins. The resins are useful in preparing adhesive compositions containing styrenic block copolymers.

WO 93/04135 discloses a pressure sensitive adhesive composition comprising polyisoprene, a styrene block copolymer and a tackifer. The tackifer comprises a blend of a solid tackifier resin with (a) a liquid tackifier; (b) a liquid plasticizer; and (c) a blend of a liquid tackifier and a liquid plasticizer.

GB 2,289,681 A2 discloses a binder composition for a colored pavement comprising a styrenic block copolymer and a dicyclopentadiene resin and a C₅ petroleum resin.

Though presenting an optimal solution to the problem of solvent-free HMPSA compositions suitable for high speed coating, the petroleum feedstocks from which the described petroleum resin tackifiers are prepared may vary significantly in availability. This creates conditions of inadequate supply or need to substitute with less optimal tackifying hydrocarbon resins.

### SUMMARY OF THE INVENTION

This invention provides an alternative low melt viscosity, solvent free, hot melt pressure sensitive adhesive composition similarly exhibiting excellent cohesive and adhesive strength. The composition comprises a) 100 parts weight elastomeric styrenic block copolymer and b) from 70 to 150 parts of a hydrocarbon resin tackifier containing i) 10-99 wt.% resin of a C₅-C₉ aromatic modified aliphatic petroleum resin and ii) 1-90 wt.% resin of a hydrogenated, alicyclic monomer containing hydrocarbon resin. These compositions are suitable for high speed application to substrates used for adhesive tapes, particularly for those adhesive tapes designed for sealing packaging materials. They are particularly suited for adhesive tapes to be used with corrugated cardboard containers.

### DETAILED DESCRIPTION OF THE INVENTION

The styrenic block copolymer used as the base elastomer component of the adhesive composition of the invention is that described in the co-pending application and is preferably a triblock copolymer of the formula (S-I)_{n-I}S wherein n = 2, i.e., is a linear polymer of the formula S-I-S wherein S is substantially a polystyrene block and I is substantially a polyisoprene block. These block copolymers may be prepared by well known anionic solution polymerization techniques using lithium-type initiators such as disclosed in U.S. Patents 3,251,905 and 3,239,478.

Preferred styrenic block copolymers have a number average molecular weight (determined by GPC) in the range of from 5,000 to 500,000, more preferably from 90,000 to 250,000, even more preferably 90,000 to 175,000, and most preferably 90,000 to 135,000. These block copolymers contain from 10 to 30% by weight of polymerized styrene, more preferably from 15 to 25% by weight polymerized styrene and most preferably from 16-20% by weight polymerized styrene.

The styrenic block copolymer component may also comprise a blend of two different block thermoplastic elastomers, one having a polystyrene block content of 10-20% by weight and the other having a different polystyrene block content of from 15-35% by weight, blended in a ratio in the range of from 10:1 to 1:10 parts by weight. The use of two different block copolymers offers the advantages of improved cohesive strength and more precisely tailoring polystyrene content in the preferred target range of from 15 to 25%, or 16-20% by weight respectively.

Though a pure triblock copolymer is preferred (one having less than 0.1 wt. of diblock polymer) the composition may also contain from 0.1 to 10 wt.%, preferably less than or equal to 6 wt.%, most preferably less than 5 wt.% of triblock copolymer of a di-block copolymer having the structure S-I and containing from 10 to 30 % by weight of the polystyrene block. This material may be present as an impurity in the manufacture of the triblock copolymer or may be separately blended with the triblock as a further technique for achieving target polystyrene content or modifying the cohesive properties of the composition.

Preferred number average molecular weight of the di-block copolymer ranges from 40,000 to 250,000.

These linear and radial block copolymers are available commercially and are prepared in accordance with methods known in the art. See the disclosures of U.S. patents 5,143,968, 5,292,819 and 5,358,783.

Particularly preferred block copolymers used in this invention have a melt flow rate in the range of from 5 to 20 g/10 min, more preferably from 10 to 18 g/10 min., as measured by ASTM D 1238 - 82 using condition G (200°C., 5kg. weight).

The b) i) petroleum resins used as principal tackifier in this invention are the (b) resins of our co-pending application and are prepared by the polymerization of a mixture of a petroleum cracked distillate generally boiling in the range 25°C to 80°C and a monovinyl aromatic monomer having 8 or 9 carbon atoms in the proportions to yield a resin containing from 5-15 wt.% of the monovinyl aromatic compound as determined by Nuclear Magnetic Resonance analysis ("NMR"). The petroleum cracked distillate comprises a mixture of saturated and unsaturated monomers, the unsaturated monomers being mono-olefins and diolefins and, although the unsaturated materials are predominantly C₅, some higher and lower materials such as C₆ olefines and diolefines may be present. The distillate may also contain saturated or aromatic materials which can act as a polymerization solvent.

The preferred monovinyl aromatic monomer is styrene which may be substituted in the aromatic group. Alternatively alpha-methyl styrene or vinyl toluene may be used. It is however, preferred for color reasons to use the pure monomer rather than the commercially available mixtures of vinyl aromatic monomers.

The resins are conveniently prepared by Friedel-Crafts catalyzed polymerization in which the mixture of cracked distillate and monovinyl aromatic monomer are treated with 0.25-2.5 wt.% of a catalyst such as aluminum chloride, aluminum bromide, or solutions, slurries or complexes thereof or borontrifluoride. The polymerization mixture may also include from 10 to 100 wt% of a chain transfer agent such as a diisobutene oligomer to obtain resins having a narrower molecular weight distribution. These reactions are generally carried out at temperatures in the range 0° to 120°C., preferably 0° to 80°C., more preferably 20° to 55°C, the conditions being controlled to yield a resin of the required softening point. Residual catalyst is quenched by suitable methods such as addition of methyl alcohol and subsequent filtration followed by water and/or caustic washing. The final solution may then be stripped of unreacted hydrocarbons and low molecular weight oils by vacuum or steam distillation.

The most preferred principal tackifier resins have ring and ball softening points in the range of from 85°C to 105°C, more preferably in the range of from 90°C to 100°C and a content of monovinyl aromatic monomer, e.g., styrene, in the range of 6-12 wt%.

A particularly preferred principal tackifier for use in the present invention has the following typical properties:

| | |
|---|---|
| Softening Point (°C) | 92 |
| Gardner Color | 3 |
| Styrene content (NMR) % | 7-10 |
| Mn (number average MW) | 1150 |
| Mw (weight average MW) | 1840 |
| Mw/Mn (molecular weight distribution) | 1.6 |
| Mz (viscosity average MW) | 2800 |

These resins and their method of manufacture are more generally disclosed in U.S. Patent 4,078,132.

The b) ii) hydrogenated hydrocarbon resins used as the secondary, or auxiliary, tackifier in this invention are typically those known as cyclopentadiene-dicyclopentadiene (CPD/DCPD) based petroleum resins, aromatic modified aliphatic resins, and C₉ aromatic resins. Each can be produced using the Friedel-Crafts polymerization processes referred to above for the principal petroleum resin tackifier. For the CPD/DCPD resins, known thermal polymerization processes are also particularly suitable. After polymerization, this secondary resin is hydrogenated by known methods so as to remove substantially all the residual ethylenic and aromatic unsaturation. "Substantially all" is meant here to include residual ethylenic or aromatic content of less than 10 wt.%, preferably less than 7 wt.%, most preferably less than 5 wt.% (as determined by NMR). For the purposes of this invention the term thermoplastic C₉ aromatic resin includes those resins produced from pure monomers such as styrene and alkyl-substituted styrenes which are similarly very reactive towards Friedel-Crafts polymerization catalysts. Additional description appears in the patent literature. See in particular U.S. patents 3,926,878, 4,242,244, 4,276.396, 4,328,090, and 4,629,766, each addressing alicyclic monomer containing resin preparation and/or hydrogenation thereof. Additional description, and reference to principal patent disclosures, for alicyclic monomer containing hydrocarbon resins is presented in "Hydrocarbon Resins", Kirk-Othmer Encycl. of Chem. Tech., v. 13, pages 717-743 (J. Wiley & Sons, 1995).

As discussed in the literature, the hydrogenated alicyclic monomer containing hydrocarbon resins may contain other monomers in addition to the CPD/DCPD, C₉, and substituted C₉ monomers, the other monomers including copolymerizable C₄-C₁₀ monomers. Preferably the secondary resin tackifier will have a softening point (Ring & Ball, ASTM E-28) ("S.P.") from 80°C to 110°C, a weight-average molecular weight ("M_{w}") of 350-900, a viscosity average molecular weight ("M_{z}") less than 1600, and a Gardner color less than or equal to 2. Preferably the S.P. is from 85 to 105, the M_{w} is from 360 to 700, and the M_{z} is from 500 to 1200, and the Gardener color is 1 or below.

Commercially available resins suitable as the secondary resin tackifier include the hydrogenated CPD/DCPD Escorez® 5000 series resins 5300 and 5380 of Exxon Chemical Co.; the hydrogenated C₅/C₉ Eastotac® H100 resin of Eastman Chemical Co.; the hydrogenated C₉/C₄ Regalite® R91 and R101 resins of Hercules, Inc., and the hydrogenated C₉ aromatic Arkon® P90 and P100 resins of Arakawa. Such commercial resins are often sold with antioxidant stabilizers present in small amounts.

The quantity of hydrocarbon resin tackifier used in combination with the block copolymer may range from 70 to 150 parts by weight per 100 parts by weight of the block copolymer. A more preferred level of addition is in the range of from 90 to 125 parts by weight per 100 parts by weight of block copolymer. The hydrocarbon resin preferably is composed of 25 to 90 wt.% resin of the b) i) resin and 10 to 75 wt.% resin of the b) ii) resin, and more preferably ranges from 45 to 55 wt.% resin of the b) i) resin and 55 to 45 wt.% resin of the b) ii) resin.

The adhesive composition may also include other additives as known in the art such as hydrocarbon extender oils, antioxidants, colorants, fillers and the like.

Suitable extender oils include aromatic, naphthenic or paraffinic oils and mixtures thereof. One of the particular advantages of the invention is that none or only minor amounts of extender oil may be required to achieve good flow and coating characteristics because of the inherently low melt viscosity properties of the adhesive of the invention. Reduction in the level of extender oil required to process the composition tends to result in improved cohesiveness of the adhesive and reduces bleed out of the extender. Where used, the extender oil is added at a level from 0.5 to 25 parts by weight per hundred parts by weight of the block copolymer, more preferably from 5 to 15 pans by weight.

Suitable antioxidants include hindered phenols such as 2,6-di-t-butyl-4-methylphenol; 1,3,5-trimethyl-2,4,6-tris (3',5'-di-t-butyl-4'-hydroxybenzyl)benzene; tetrakis [(methylene (3,5-di-t-butyl-4-hydroxyhydrocinnamate)] methane (IRGANOX™ 1010); octadecyl-3,5-di-t-butyl-4-hydroxy cinnamate (IRGANOX™ 1076); and like known materials. Where present, the antioxidant is used at a preferred level of from 0.05 to 2 parts by weight per 100 parts by weight of block copolymer.

As indicated above, the components forming the adhesive formulation of the invention have properties such that adhesives having a very low melt viscosity are provided, thereby facilitating flow of the adhesive through the coating apparatus, e.g., coating die, without resorting to the inclusion of solvents or excess extender oil into the composition. Melt viscosities of from 35,000 to less than 100,000 milli Pascal second (mPa.s or CPS) measured at 175°C per ASTM D 3236 can be readily achieved. The more preferred melt viscosity at 175°C is less than 80,000 m.Pas and the most preferred melt viscosity at 175°C lies in the range of from 35,000 to 50,000 mPa.s.

Highly efficient manufacturing processes are made possible through use of the adhesive formulations of the invention since high speed coating means can be used. For example, the manufacture of oriented polypropylene film based PSA tapes requires coating application speeds of at least 250 m/min. The formulations of the invention are capable of application up to 750 m/min. or more, and the high speed efficiency processes of this invention can utilize preferred coating speeds of 400 m/min. and up.

The components of the adhesive composition may be blended by mixing them using any suitable mixing device at a temperature above the melting point of the components, e.g., at 130 to 180°C for a period of time sufficient to form a homogeneous mixture, normally 1 to 120 minutes depending on the type of mixing device.

The adhesive composition of the present invention may be applied to a substrate as a melt and then cooled using conventional procedures. The substrate used depends upon the use envisaged but it is usually a relatively thin material, usually no greater than 3.2 mm in thickness, and in the manufacture of tapes and labels the substrate is a relatively thin sheet material. The sheet material may be a polymeric material which is flexible at room temperature. The sheet material may be a homopolymer of an ethylenically unsatured monomer such as ethylene, propylene or vinyl chloride, or be polyester or polyamide provided it has sufficient flexibility for the desired end use. Alternatively the substrate may be made from cellulosic or reconstituted cellulosic material such as rayon. The substrate need not be a sheet material but may be composed of fibers which may be woven, or nonwoven as is the case in paper. Woven substrates may be made from cellulosic material, such as cotton or from fibers of any of the above mentioned polymers.

The composition is applied to the substrate using conventional coating techniques such as roller coaters, die coaters and blade coaters, generally at a temperature in the range of from 150°C to 200°C. For example, the ready mixed HMPSA heated to the temperature where it will flow readily, usually at temperatures from 170°C to 190°C, can be applied to a flexible backing by any of know techniques, preferably using a slot die.

A slot die is a closed system where the HMPSA is pumped through by a positive displacement pump. The slot die usually includes a rotating bar at the point of the outlet of the HMPSA in order to obtain a smooth coating surface.

Due to required thin channels inside the die through which the HMPSA has to flow, it is obvious that there are melt viscosity limits for the HMPSA depending on required throughput. Thus one can say that. the higher the coating speed is, the lower the melt viscosity needs to be to obtain consistent and even coating at the desired thickness onto the web.

The substrate should be coated with sufficient composition to provide a dry coat weight from 10 to 65 g/cm². Generally in the manufacture of tapes using a continuous sheet polymeric substrate, a dry coat weight of 10-30 g/m² is used. In the manufacture of labels, a dry coat weight from 10 to 30 g/cm² is usually used. In the manufacture of masking tape a dry coat weight from 35 to 65 g/cm² is usually used.

After coating, the coated substrate is cut to the required dimension. In the manufacture of tape the substrate is cut into strips and rolled to provide a finished product. The substrate may also be cut into shaped items to provide labels or medicinal tapes.

The following examples are illustrative of the invention. Materials used in preparing the adhesive compositions as identified in the examples are as follows:

| | |
|---|---|
| V4111 - | A linear polystyrene-polyisoprene-polystyrene triblock copolymer (SIS) supplied by Dexco Polymers having a styrene content of 17 5 - 19.0 % by weight, melt flow rate of 9.7 - 13.8 g/10 min., a number average mol. wt. of 125,000 ± 2%, and 0 wt.% diblock (SI).¹ |
| | |
| DPX 511 - | A linear polystyrene-polyisoprene-polystyrene triblock copolymer (SIS) supplied by Dexco Polymers having a styrene content of 17.5 to 19.0% by weight, melt flow rate of 14.5 - 17 g/10 min., number average mol. wt. of 110,000 ± 2%, and 0 wt.% diblock (SI).¹ |
| | |
| CARIFLEX® TR 1107 - | A polystyrene-polyisoprene-polystyrene triblock copolymer of Shell Chemical being a styrene content of 15 wt.%, diblock (SI) content of 18 wt.%, melt flow rate 9 g/10 min., and number average mol. wt. of 160,000.¹ |
| | |
| QUINTACK ® 3450 - | A radial polystyrene-polyisoprene-polystyrene from Nippon Zeon having 20 wt.% styrene, 30 wt.% di-block content, melt flow rate of 15 g/10 min., and number average mol. wt. of 180,000.¹ |
| | |
| E - 1310 - | Petroleum resin available under the trade name ESCOREZ™ from Exxon Chemical Company and containing 0.3% by weight of polymerized styrene and having a softening point of 93.5°C. |
| | |
| E - 2203 - | Petroleum resin available under the trade name ESCOREZ™ from Exxon Chemical Company and containing 8-10% by weight of polymerized styrene, and having a softening point of 92°C and a number average molecular weight of 1150. |
| | |
| WINGTACK® EXTRA - | Petroleum resin available from Good Year containing 6.9% by weight of polymerized styrene and having a softening point of 99.2°C. |
| | |
| FLEXON® 876 - | A paraffinic extender oil available from Exxon Chemical Company. |
| | |
| SI-Diblock - | A polystyrene - polyisoprene di-block copolymer containing 18% by weight polymerized styrene. |
| | |
| ANTIOXIDANT - | IRGANOX® 1076, a phenolic compound of CIBA GEIGY |
| | |
| E-5380 | ESCOREZ® 5380 of Exxon Chemical Co. having ring and ball s.p. of 85°C and M_{w} of 360. |
| | |
| E-5300 | ESCOREZ® 5300 of Exxon Chemical Co. having ring and ball s.p. of 105°C and M_{w} of 400. |
| | |
| REGALITE™ R91 | Fully hydrogenated petroleum resin from Hercules Corp. having ring and ball s.p. of 89° C, M_{w} of 650 and M_{z} of 900. |
| | |
| REGALITE™ R101 | Fully hydrogenated petroleum resin from Hercules Corp. having ring and ball s.p. of 101° C, M_{w} of 700 and M_{z} of 1050. |
| | |
| EASTOTAC™ H100 | Hydrogenated petroleum resin of Eastman Chemical Co. having a ring and ball s.p. of 100°C. |
| | |
| ARKON® P90 | Fully saturated alicyclic hydrocarbon resin of Arakawa having ring and ball s.p. of 90°C and M_{w} of 570. |
| | |
| ARKON® P100 | Fully saturated alicyclic hydrocarbon resin of Arakawa having ring and ball s.p. of 100°C and M_{w} of 610. |

| | |
|---|---|
| ¹ Note: styrene contents, molecular weights and melt flow rates were measured in accordance with the methods described in U.S. patent 5,143,968. | |

The various test methods identified in the Tables are as follows:

Ball Tack is measured by Pressure Sensitive Tape Council (PSTC) test 6.

180° Peel Strength is measured by PSTC-1 test.

Loop Tack is measured by the FINAT-9 test.

Viscosity is measured by ASTM D-3236 test.

Hot shear is measured by suspending a 1000 gram weight from a 25 mm wide strip of MYLAR™ polyester film coated with the adhesive formulation which is adhered to a stainless steel plate or corrugated cardboard surface with a contact area of 12.5 mm. x 25mm. The sample is placed in a ventilated oven at 40°C. Time is recorded until stress failure occurs. Typically, these tests are made and recorded individually to determine reliability of the holding power.

Shear Adhesion Failure Temperature (SAFT) is determined by adhering a coated MYLAR strip of 25 mm. width to stainless steel with a contact area of 12.5 mm. x 25 mm., hanging the samples in an oven held at 25°C and suspending a 500 gram weight from the bottom of the strip. The temperature is raised at 0.4C°/min and the bond failure temperature is measured. The Shear Adhesion Temperature is the average of three tests.

### Examples 1-18

A series of adhesive compositions within and outside the scope of the invention were prepared by mixing ingredients as set forth in Tables 1 and 2 in a two blade mixer at 145°C for a period of 70 minutes. The compositions were then heated to 175°C and the melt was pumped through a coating die onto a 36 micron MYLAR™ polyester film. The dry weight of the applied coating layer ranged from 19 to 21 g/m². After coating, the tacky side of the film was laminated to a release coated oriented polypropylene film. The film was then wound and cut.

Formulation and physical property data for the various formulations are shown in Tables 1 and 2. The "Reference" example is of a formulation in accordance with copending application U.S. Ser. No. 08/345,103. Formulation blends a-d are for comparative purposes and show adhesive compositions prepared with resins meeting the b ii) description but without the b i) principal resin. Similarly, blend 1 is a comparative example.

As can be observed from Tables I and II, the blend viscosities are all lower than that of the Reference and thus represent significant benefit for high speed coating. Adhesive properties for this invention are represented best by the ball tack properties. In this test, increased adherence is indicated by decreased distance of travel. Each invention example illustrates a value less than or 3.5 cm, and for most examples are less than or equal to the 2.5 cm. value achieved by the Reference example. The SAFT values are preferably at a minimum of 90°C, each invention sample with the exception of Blends 2 and 3 meet this objective, and those blends are sufficiently close to be fully operable. Shear on Cardboard at 40°C preferably has average values greater than 40 hours and each blend satisfies this criterion.

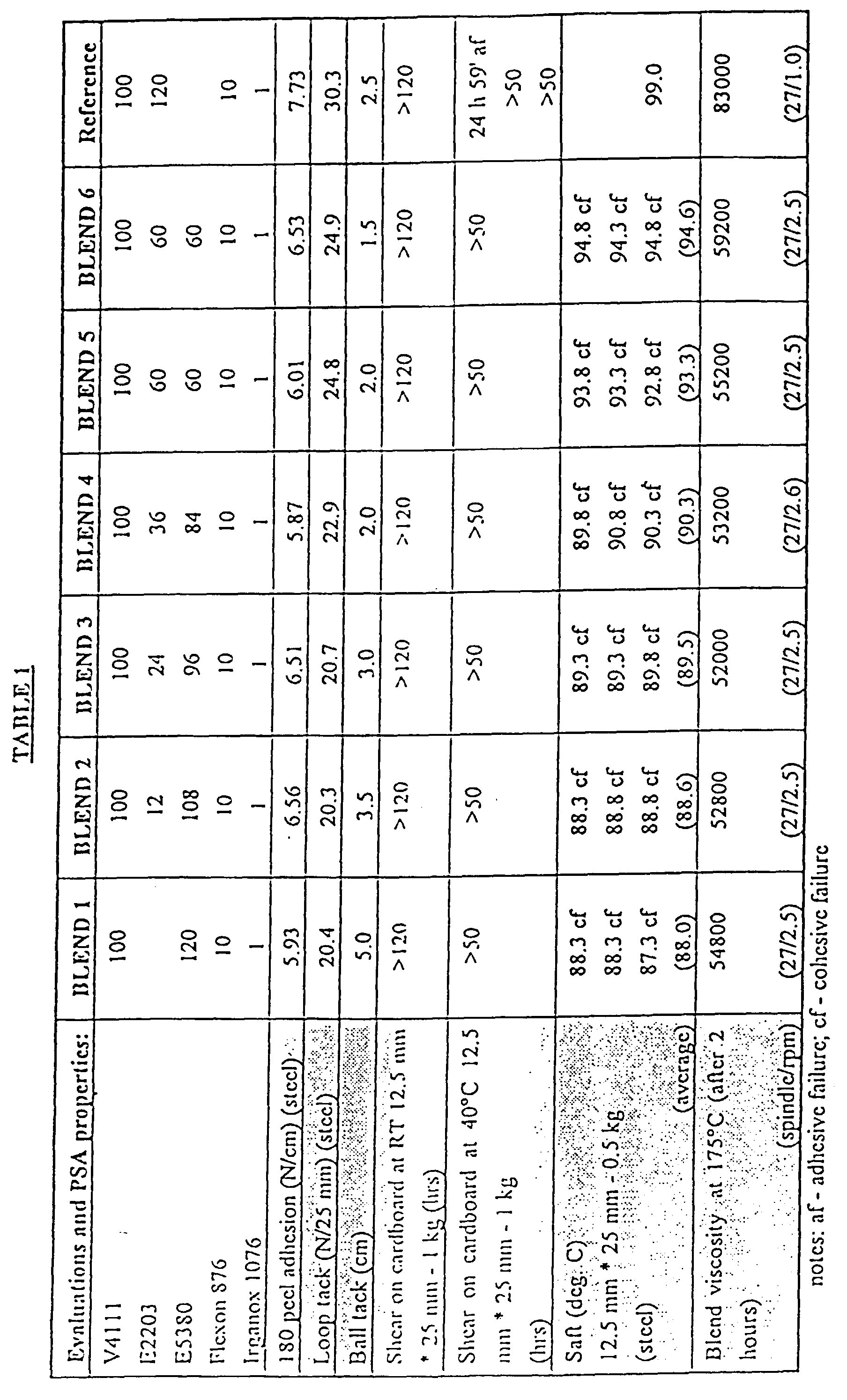

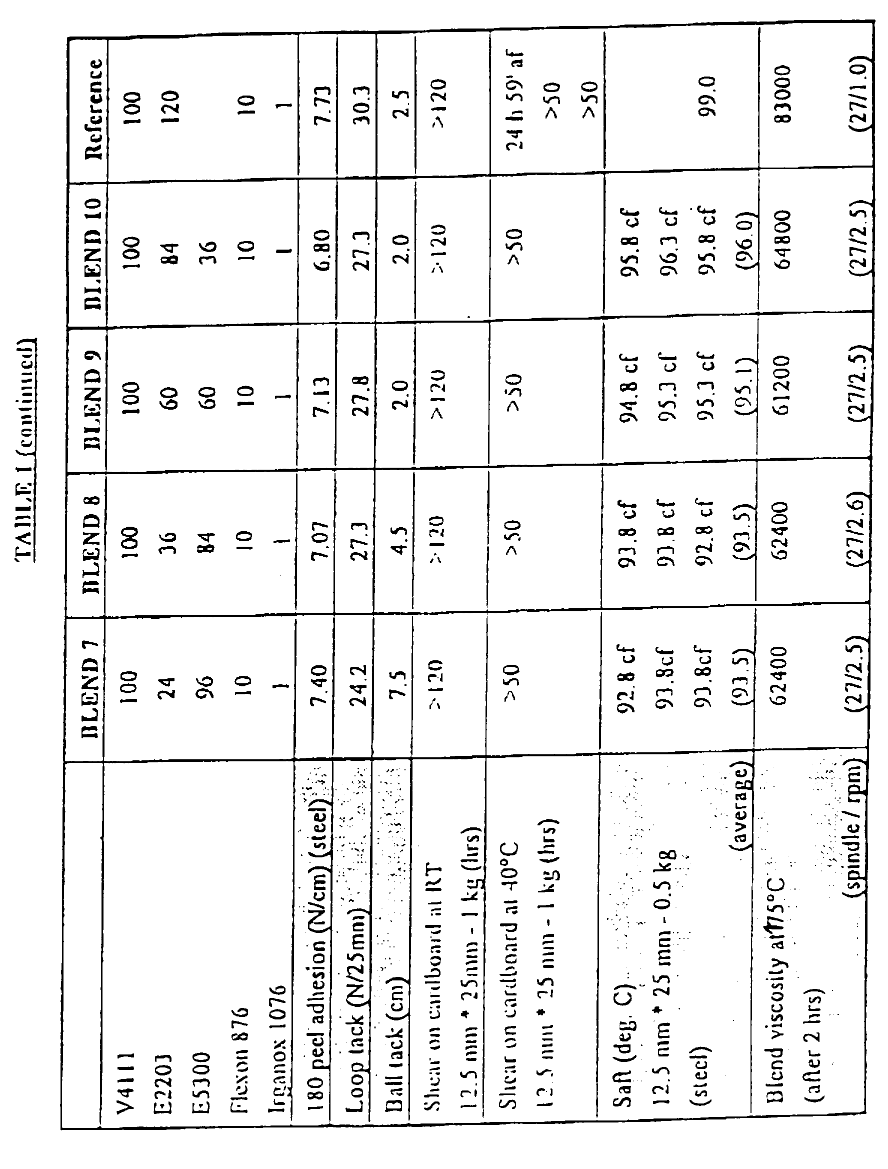

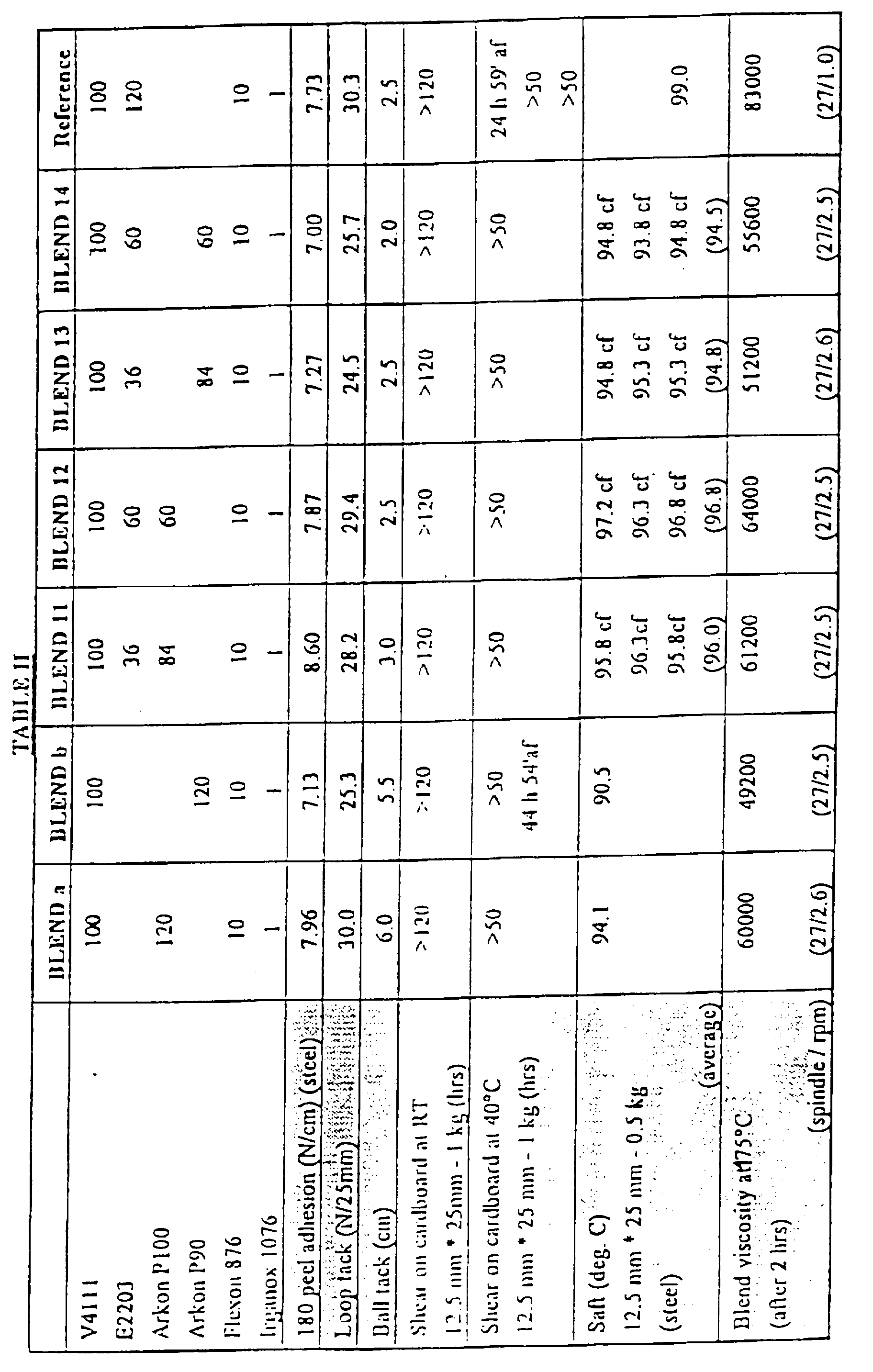

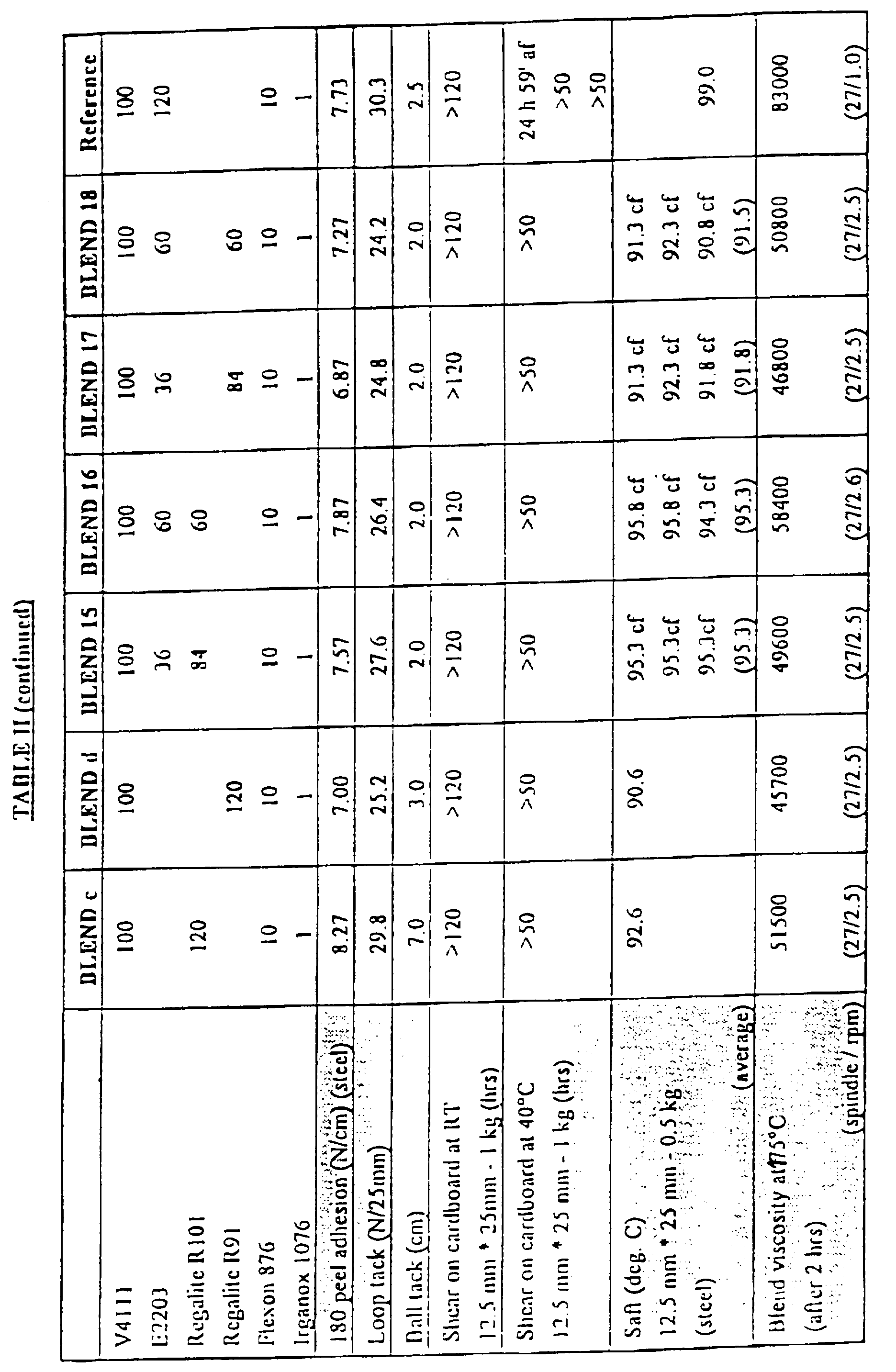

As illustrated above, the balance of properties sought for high speed coating application are readily met by the blend compositions of the invention. Sufficiently low melt viscosities are achieved while both tack and adhesion properties are at least retained or improved.

## Claims

1. A hot melt pressure sensitive adhesive composition comprising a mixture of:
a) 100 parts by weight of a styrenic block copolymer having the structure (S-I)ₙ₋₁S wherein S is a polystyrene block, I is a polyisoprene block and n is an integer of from 2 to 10 and wherein the content of polystyrene in said styrenic block copolymer ranges from 10 to 30 % by weight and wherein the number average molecular weight of said styrenic block copolymer ranges from 50,00 to 500,000;
b) from 70 to 150 parts by weight of a hydrocarbon tackifier resin comprising:
i) 10-99 weight % resin of a C₅-C₉ aromatic modified aliphatic petroleum resin having a ring and ball softening point in the range of 85 °C to 105 °C comprising a petroleum feed comprising C5 olefins and C5 diolefins or a mixture of C5 and C6 olefins and diolefins, said feed being obtained from the cracking of petroleum feedstock, copolymerized with from 5 to 15% by weight, based upon the weight of the petroleum feed of one or a mixture of monovinyl aromatic compounds having 8-9 Carbon atoms; and
ii) 1-90 weight % resin of a hydrogenated, alicyclic monomer containing hydrocarbon resin,
wherein polyisoprene is not present in the mixture.

2. The composition of claim 1, wherein said b)i) aromatic modified aliphatic petroleum resin comprises monovinylaromatic compound styrene as the aromatic monomer modifier.

3. The composition of claim 1 or 2, wherein said styrenic block copolymer comprises a blend of at least two different block copolymers, one having a polystyrene block content of from 10 to 20 % by weight and another having a different polystyrene block content of from 15 to 35 % by weight.

4. The composition of any of the preceding claims, further containing from 0.1 up to 10 parts by weight of a di-block copolymer having the structure S-I said di-block copolymer having a polystyrene content of from 10 to 30% by weight.

5. The composition of any of the preceding claims, wherein said b) i) hydrocarbon resin has a softening point in the range of from 90 °C to 100°C and a content of monovinyl aromatic monomer is the range of 6 to 12% by weight.

6. The composition of any of the preceding claims, wherein said b) ii) hydrogenated, alicyclic monomer containing hydrocarbon resin has a softening point (ring and ball) of 80°C to 110°C, a M_{w} of 350-900, and M_{z} less than 1600.

7. The composition of any of the preceding claims, wherein said b) ii) hydrocarbon resin is a hydrogenated cyclopentadiene/dicyclopentadiene petroleum resin.

8. The composition of any of the preceding claims, wherein said b) hydrocarbon tackifier resin contains 45 to 55 wt.% resin of the b) i) resin and 55 to 45 wt.% resin of the b) ii) resin.

9. A process for preparing an adhesive tape comprising:
a) heating the hot melt pressure sensitive adhesive composition of any of claims 1 through 8 to a temperature in the range of from 150°C to 200°C;
b) applying a thin coating of said melt to the surface of a tape substrate at a speed greater than or equal to 400 m/min. to form a coated substrate; and
c) cooling said coated substrate.

10. An adhesive tape comprising a tape substrate having the adhesive composition of any of claims 1 through 8, said composition applied to one surface thereof at a dry thickness in the range of from 10 to 65 g/cm².

## Patentansprüche

1. Heißschmelzhaftkleberzusammensetzung, die eine Mischung aus
a) 100 Gewichtsteilen Styrol-Blockcopolymer mit der Struktur (S-I)ₙ₋₁S, wobei S ein Polystyrolblock ist, I ein Polyisoprenblock ist und n eine Zahl von 2 bis 10 ist und der Gehalt an Polystyrol in dem Styrol-Blockcopolymer im Bereich von 10 bis 30 Gew.% liegt und das durchschnittliche Molekulargewicht (Zahlenmittel) des Styrol-Blockcopolymers im Bereich von 50 000 bis 500 000 liegt,
b) 70 bis 150 Gewichtsteilen Kohlenwasserstoffklebrigmacherharz umfaßt, das
i) 10 bis 99 Gew.% Harz aus C₅- bis C₉- aromatisch modifiziertem aliphatischem Erdölharz mit einem Ring-und-Kugel-Erweichungspunkt im Bereich von 85°C bis 105°C, das Erdöleinsatzmaterial umfaßt, das C₅-Olefine und C₅-Diolefine oder eine Mischung aus C₅- und C₅-Olefinen und -Diolefinen umfaßt, wobei das Einsatzmaterial aus dem Cracken von Erdöleinsatzmaterial erhalten wird, und 5 bis 15 Gew.%, bezogen auf das Gewicht des Erdöleinsatzmaterials, von einer oder einer Mischung von monovinylaromatischen Verbindungen mit 8 bis 9 Kohlenstoffatomen copolymerisiert wird, und
ii) 1 bis 90 Gew.% Harz aus hydriertem, alicyclisches Monomer enthaltendem Kohlenwasserstoffharz
umfaßt, wobei in der Mischung kein Polyisopren vorhanden ist.

2. Zusammensetzung nach Anspruch 1, bei der das b) i) aromatisch modifizierte aliphatische Erdölharz die monovinylaromatische Verbindung Styrol als aromatisches Monomermodifizierungsmittel umfaßt.

3. Zusammensetzung nach Anspruch 1 oder 2, bei der das Styrol-Blockcopolymer ein Gemisch aus mindestens zwei unterschiedlichen Blockcopolymeren umfaßt, wobei eines einen Polystyrolblockgehalt von 10 bis 20 Gew.% hat und ein anderes einen anderen Polystyrolblockgehalt von 15 bis 35 Gew.% hat.

4. Zusammensetzung nach einem der vorhergehenden Ansprüche, die außerdem 0,1 bis zu 10 Gewichtsteile Diblockcopolymer mit der Struktur S-I umfaßt, wobei das Diblockcopolymer einen Polystyrolgehalt von 10 bis 30 Gew.% hat.

5. Zusammensetzung nach einem der vorhergehenden Ansprüche, bei der das b) i) Kohlenwasserstoffharz einen Erweichungspunkt im Bereich von 90°C bis 100°C und einen Gehalt an monovinylaromatischem Monomer im Bereich von 6 bis 12 Gew.% hat.

6. Zusammensetzung nach einem der vorhergehenden Ansprüche, bei der das b) ii) hydrierte, alicyclisches Monomer enthaltende Kohlenwasserstoffharz einen Erweichungspunkt (Ring und Kugel) von 80 bis 110°C, ein M_{w} von 350 bis 900 und M_{z} von weniger als 1600 hat.

7. Zusammensetzung nach einem der vorhergehenden Ansprüche, bei der b) ii) Kohlenwasserstoffharz hydriertes Cyclopentadien/Dicyclopentadien-Erdölharz ist.

8. Zusammensetzung nach einem der vorhergehenden Ansprüche, bei der das b) Kohlenwasserstoffklebrigmacherharz 45 bis 55 Gew.% Harz des b) i) Harzes und 55 bis 45 Gew.% Harz des b) ii) Harzes enthält.

9. Verfahren zur Herstellung von Klebeband, bei dem
a) die Heißschmelzhaftkleberzusammensetzung gemäß einem der Ansprüche 1 bis 8 auf eine Temperatur im Bereich von 150°C bis 200°C erwärmt wird,
b) eine dünne Beschichtung der Schmelze auf die Oberfläche von Bandsubstrat mit einer Geschwindigkeit größer als oder gleich 400 m/Min aufgebracht wird, um ein beschichtetes Substrat zu bilden, und
c) das beschichtete Substrat abgekühlt wird.

10. Klebeband, das ein Bandsubstrat mit der Kleberzusammensetzung gemäß einem der Ansprüche 1 bis 8 enthält, wobei die auf eine Oberfläche desselben aufgebrachte Zusammensetzung, eine Trockendicke im Bereich von 10 bis 65 g/cm² hat.

## Revendications

1. Composition d'adhésif thermofusible sensible à la pression, comprenant un mélange :
a) de 100 parties en poids d'un copolymère séquencé styrénique de structure (Si-I)ₙ₋₁S dans laquelle S représente un bloc polystyrène, I représente un bloc polyisoprène et n représente un nombre entier de 2 à 10, la quantité de polystyrène dans ledit copolymère séquencé styrénique étant comprise dans l'intervalle de 10 à 30 en poids, et la moyenne en nombre du poids moléculaire dudit copolymère séquencé styrénique étant comprise dans l'intervalle de 50 000 à 500 000 ;
b) de 70 à 150 parties en poids d'une résine d'adhésivité hydrocarbonée comprenant :
i) 10 à 99 % en poids d'une résine de pétrole aliphatique à modification aromatique en C₅ à C₉ ayant un point de ramollissement par la méthode bille et anneau compris dans l'intervalle de 85°C à 105°C, comprenant une charge dérivée du pétrole constituée d'oléfines en C₅ et de dioléfines en C₅ ou d'un mélange d'oléfines et dioléfines en C₅ et C₆, ladite charge d'alimentation étant obtenue par craquage d'une charge d'alimentation dérivée du pétrole, copolymérisée avec une quantité de 5 à 15 % en poids, sur la base de poids de la charge d'alimentation dérivée du pétrole, d'un composé aromatique monovinylique ou d'un mélange de composés aromatiques monovinyliques ayant 8-9 atomes de carbone ; et
ii) 1 à 90 % en poids d'une résine hydrocarbonée hydrogénée contenant un monomère alicyclique,
dans laquelle du polyisoprène n'est pas présent dans le mélange.

2. Composition suivant la revendication 1, dans laquelle la résine de pétrole aliphatique à modification aromatique b)i) comprend un composé monovinyl-aromatique consistant en styrène comme modificateur monomérique aromatique.

3. Composition suivant la revendication 1 ou 2, dans laquelle le copolymère séquencé styrénique comprend un mélange d'au moins deux copolymères séquencés différents, l'un ayant une teneur en blocs polystyrène de 10 à 20 % en poids et l'autre ayant une teneur différente en blocs polystyrène comprise dans l'intervalle de 15 à 35 % en poids.

4. Composition suivant l'une quelconque des revendications précédentes, contenant en outre 0,1 jusqu'à 10 parties en poids d'un copolymère diséquencé de structure S-I, ledit copolymère diséquencé ayant une teneur en polystyrène de 10 à 30 % en poids.

5. Composition suivant l'une quelconque des revendications précédentes, dans laquelle la résine hydrocarbonée b)i) a un point de ramollissement compris dans l'intervalle de 90°C à 100°C et la teneur en monomère monovinylique aromatique est comprise dans l'intervalle de 6 à 12 % en poids.

6. Composition suivant l'une quelconque des revendications précédentes, dans laquelle la résine hydrocarbonée hydrogénée contenant un monomère alicyclique, b)ii) a un point de ramollissement (par la méthode bille et anneau) de 80°C à 100°C, une valeur de Mw de 350 à 900 et une valeur de Mz inférieure à 1600.

7. Composition suivant l'une quelconque des revendications précédentes, dans laquelle la résine hydrocarbonée b)ii) est une résine de cyclopentadiène / dicyclopentadiène hydrogénée dérivée du pétrole.

8. Composition suivant l'une quelconque des revendications précédentes, dans laquelle la résine d'adhésivité hydrocarbonée b) contient 45 à 55 % en poids de résine de la résine b)i) et 55 à 45 % en poids de résine de la résine b)ii).

9. Procédé pour la préparation d'un ruban adhésif, comprenant les étapes consistant :
a) à chauffer une composition d'adhésif thermofusible sensible à la pression suivant l'une quelconque des revendications 1 à 8 à une température comprise dans l'intervalle de 150°C à 200°C ;
b) à appliquer un revêtement mince de la masse fondue à la surface d'un substrat sous forme de ruban à une vitesse supérieure ou égale à 400 m/minute pour former un substrat revêtu ; et
c) à refroidir ledit substrat revêtu.

10. Ruban adhésif comprenant un substrat sous forme de ruban portant la composition d'adhésif suivant l'une quelconque des revendications 1 à 8, ladite composition étant appliquée à une de ses surfaces en une épaisseur à l'état sec comprise dans l'intervalle de 10 à 65 g/cm².
